# EUROPEAN PATENT SPECIFICATION

(11) **EP 3 776 797 B1**
(45) Date of publication and mention of the grant of the patent: **22.12.2021**
(21) Application number: 19720384.7
(22) Date of filing: 05.04.2019
(51) Int. Cl.: H02J 7/00, H02J 7/34, B60L 53/53

(54) **CHARGING STATION FOR ELECTRIC VEHICLES**
LADESTATIONEN FÜR ELEKTROFAHRZEUGE
BORNE DE RECHARGE POUR VÉHICULES ÉLECTRIQUES

(30) Priority: 05.04.2018 GB 201805713; 05.04.2018 GB 201805714
(43) Date of publication of application: 17.02.2021
(73) Proprietor: Embex GmbH, 79100 Freiburg (DE)
(72) Inventor: THEOPOLD, Tobias, 44263 Dortmund (DE)
(74) Representative: Westphal, Mussgnug & Partner Patentanwälte mbB
(86) International application number: PCT/EP2019/058718
(87) International publication number: WO 2019/193188

(56) References cited:
- DE-A1-102016 103 011
- US-A1- 2017 366 039

## Description

### Technical Field

The invention relates to a charging station for charging electric energy storages of electric vehicles, such as cars, motorbikes, buses, trucks, trains, or boats to name a few. The invention also relates to a method for charging electric energy storages of charging electric vehicles.

### Technical Background

Electric vehicles use one or more electric motors for propulsion. In case an electric vehicle comprises a battery for storing electrical energy and to power the electric motors, this battery has to be charged from time to time. Most electric vehicles are equipped with an internal charger, which has to be connected to an external power source for charging the battery. Such an external power source is for example the power socket connected to the public power grid, for example at home in the garage. There are also electric vehicles which change their battery at a battery changing station. However the discharged batteries still have to be re-charged in the same way. The invention therefore also relates to charging stations not only for on board batteries of electric vehicles but also where batteries of electric vehicles are separated from the electric vehicle to be re-charged.

Despite the environmental issues with combustion engines, electric vehicles are not widely accepted yet as the users of electric vehicles are used to the relatively short time it takes to re-fuel their vehicle with a combustion engine. It is therefore crucial to provide a network of charging stations which allow re-charging of an electric vehicle in a very short time. Although internal chargers for the electric vehicle for charging the battery from a charging station have been developed which allow relatively fast re-charging of the battery, the power that a charging station can request from the electrical grid limits the power a charging station can deliver to the electric vehicle. At the time, quick chargers are available that can charge an electric vehicle with 50kW but a 3-phase power socket of the public power grid would only provide 22kW. In order to overcome this problem, charging stations exists which are equipped with a buffer, for example a lithium battery, which provides the extra current requested by the electric vehicle. The buffer is recharged at times when no electric vehicle is connected to the charging station.

Such charging stations are disclosed for example in US 2017/366039 and DE 10 2016 103011 A1.

### Object of the invention

Charging stations with such energy buffers have to manage issues that come with high currents such as high heat losses and dissipating heat. A further object of the invention is to allow a flexible adaption of the charging station to various applications and configurations.

### Summary of the invention

In order to solve these problems the invention proposes a charging station for charging electric energy storages of electric powered vehicles according to claim 1. A corresponding method is provided in claim 14.

A charging station according to the present invention comprises an input circuit for connecting the charging station to an electrical power source; an output circuit for connecting the charging station via charging plugs to the electric energy storages of electric vehicles; an electrical direct current charging buffer with a positive terminal and a negative terminal configured to be charged by the electrical power source; a n-phase transformer for galvanic isolation of the input circuit from the output circuit with primary windings on the input circuit side and secondary windings on the output circuit side; a sensor for sensing at least one of voltage or current consumed during charging the electrical operated vehicle providing a sensor signal that is indicative of the sensed voltage and/or current. The output circuit further comprises a switching circuit for periodically connecting the positive terminal of the charging buffer and the negative terminal of the charging buffer to the primary windings; control means for receiving the sensor signal and configured to control the switching circuit to provide a predetermined voltage and/or charging current.

According to the invention the charging station has a mode selector circuit which is configured to receive a mode signal which is indicative whether the electric energy storage requires AC current or DC current and wherein the mode selector in DC charging mode connects the bridge rectifier to the at least one secondary winding of the n-phase transformer and in AC charging mode disconnects the bridge rectifier from the at least one secondary winding of the n-phase transformer.

In an aspect of the invention the charging station may comprise control means for providing pulse width modulated signals for controlling switching elements of the switching circuit.

In this aspect of the invention the pulse width modulation circuit enables the charging station to produces different charging voltage schemes as a function of the requirement of the electrical energy buffer which is connected to the interface of the charging station. By modifying the switching signals which are sent to the switching elements, the output circuit of the charging station can provide different AC modes, for example a single phase current at a voltage of 230 Volts or a three phase current with 400 Volts.

In another aspect of the invention the charging station has at least one secondary winding which is connected to a fly back filter for providing a DC charging current on DC connectors of the charging plugs.

By providing a fly back filter the charging station is enabled to charge alternatively a battery of an electric vehicle also with a DC voltage. Alternatively the DC charging current may be generated by using a push pull converter, preferably a push pull converter with a full bridge rectifier.

In another aspect of the invention the secondary windings of the n-phase transformer are connected in a Y-configuration providing a neutral line and n secondary windings. The number of secondary windings may be any number starting with one.

The use of a transformer with secondary windings in Y-connection, i.e. first winding ends of every winding are connected together to one common conductor, allows to produce with the flyback filter, different DC output voltages depending whether one winding end is connected to one fly-back filter input and another fly-back filter input is connected to the neutral line or a first secondary winding end is connected to one fly- back filter input and another fly-back filter input is connected to a second secondary winding end (W).

Similarly different configurations can be used in connection with a push pull converter or any other suitable DC/DC converter. In another aspect of the invention the secondary windings of the n-phase transformer are connected to a bridge rectifier. In this case the switching circuit is adapted to provide switching signals in order to control the n-phase transformer as a push-pull converter.

In another aspect of the invention a third secondary winding end is connected to the second secondary winding end.

This aspect of the invention allows another DC voltage option to produce.

In another aspect of the invention the winding direction of the second secondary winding is the opposite to the winding direction of the first secondary winding.

This aspect of the invention especially allows the fly back filter to increase its DC charging voltage.

In another aspect of the invention the fly back filter comprises a diode.

In another aspect of the invention the fly back filter comprises a capacitor. In another aspect of the invention the charging current is filtered with a LC low pass filter.

In another aspect of the invention in AC charging mode the switching control circuit is configured to modify the phase of at least one pair of signals of the switching control signals in relation to the other pairs of switching signals to compensate for the opposite winding direction of the second secondary winding.

In another aspect of the invention a first DC/DC converter is provided as a down converter for converting a DC input voltage, for example from a rectified AC input voltage into an intermediate voltage that has a lower voltage than the DC input voltage. In another aspect of the invention a second intermediate DC module, connected with its input to the output of the first DC/DC converter may comprise an energy buffer, such as a battery or a capacitor bank.

A program controlled control circuit allows for the utmost flexibility to adapt the charging station to new standards or new quasi standards in charging schemes.

Brief Description of the Drawings Aspects of the present invention will now be described in detail, by way of example only with reference to the following drawings in which:
Figure 1 shows a schematic block diagram of a charging station for an electric vehicle according to the invention;
Figure 2 shows a schematic diagram of a second intermediate DC circuit for an electric charger according to the invention
Figure 3 shows an electric diagram of a second intermediate circuit and an output circuit for an electric charger according to the invention.
Figure 4a shows a full bridge push pull converter
Figure 4b shows voltage and current diagrams of a full bridge converter
Figure 5a shows a three phase full bridge push pull converter
Figure 5b shows voltage and current diagrams for a three phase full bridge push pull converter.

### Detailed Description

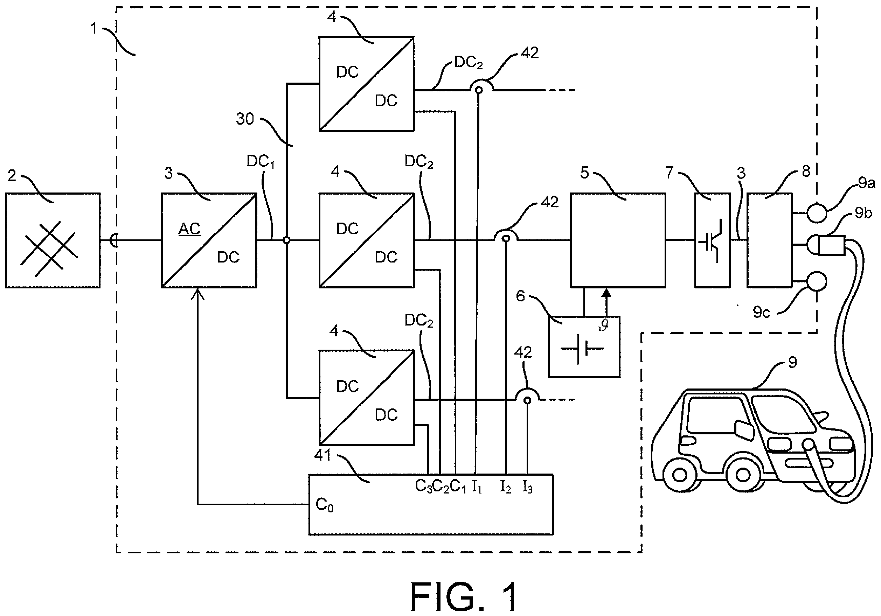

In the accompanying figures, like numerals refer to like elements throughout the description. Figure 1 shows a schematic overview of a charging station 1 which is electrically connected by an AC input module 3 to a public electrical grid 2, and by a transformer
8 via at least one socket/plug 9b to an electric vehicle 9. The AC input module 3 basically comprises a three-phase-bridge which converts the 400 volts of a 3-phase AC to a DC voltage of about 565 volts. The DC output voltage of the AC input module 3 forms a first intermediate DC voltage DCi. Preferably the three-phase bridge is a full bridge, as this reduces the ripples of the first intermediate DC voltage DCi. For example if costs are an issue, a person skilled in the art also may consider to use a three-phase half bridge for rectification of the input AC power.

In this embodiment the three-phase full bridge comprises as rectifying elements thyristors (not shown) which can be controlled by an input module control circuit (not shown) or an external control signal Co. The input module control circuit may comprise an overvoltage detector (not shown) which blocks the thyristors in the event the voltage of the input AC voltage exceeds a predetermined overvoltage threshold. In a variant of the embodiment the overvoltage detector may also detect under voltage situations. Similarly the input module control circuit may comprise current sensing means (not shown) to measure the current drawn by the input module 1 and may limit the input current to a predetermined input current level. Alternatively or additionally the information about the power consumed in the various modules of the charging station may be communicated by the other modules of the charging station to the input module control circuit and the input module control circuit may control the input AC current accordingly. Optionally the input module 3 may also include a power-factor correction circuit (PFC) (not shown) for improving the total harmonic distortion (THD) and electromagnetic interference (EMI) with the connected grid 2.

Alternatively or in combination with an AC input module 3 a DC input module (not shown) may provide the first intermediate DC voltage from a DC power source such as fuel cell or solar panels. Similarly, to a public grid the power provided by a DC power source may be limited, or even worse may vary for example in case of solar panels with the solar radiation. The person skilled in the art readily appreciates that the advantages of the invention are beneficial to all kinds of electrical power sources where the provided power is somewhat limited.

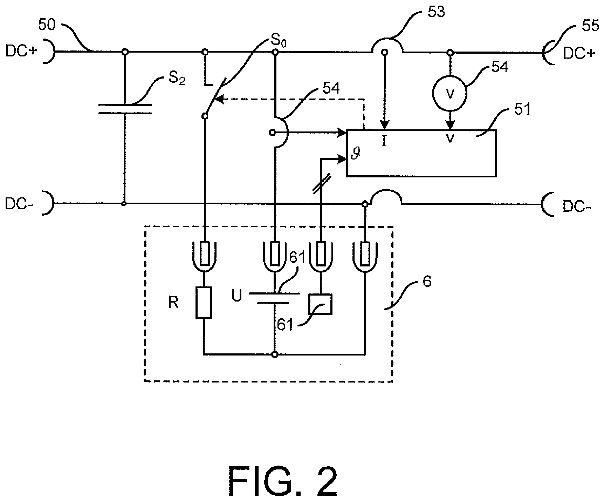

The first intermediate DC voltage DC-1 is distributed by a first intermediate DC rail 30 to three first intermediate DC/DC modules 4. In the abstract schematic drawing of Fig. 1 the DC power rail 30 is depicted as a single line. The person skilled in the art readily appreciates that in reality the DC rail 30 comprises a first positive DC power rail DCi+ and a negative DC power rail DCi- as explicitly shown later in Figure 2. Each first intermediate DC/DC module 4 provides at its respective first intermediate output DC₂ a second intermediate voltage V_{DC2}. Each first intermediate output DC₂ supplies the second intermediate voltage V_{DC2} to a second intermediate DC/DC module 5.

Each first intermediate DC/DC module 4 may comprise a control circuit 41 for measuring the current that is provided by each DC/DC converter 4. For this purpose the control circuit 41 is connected to first current sensors 42. Additionally or alternatively the control circuit 41 measures by means of voltage sensors (not shown in Figure 1) the second intermediate voltage V_{DC2} each DC/DC module 4 delivers at its first intermediate output DC₂. In this embodiment the DC/DC converters 4 are designed as voltage-down converters which convert the first intermediate voltage of nominal 565 volts down to the second intermediate DC voltage V_{DC2}, which in this embodiment has been chosen to 420 volts. A second intermediate voltage V_{DC2} which is substantially lower than the voltage at the input of the input circuit 2, respectively the first intermediate DC voltage V_{DC1} simplifies the mitigation of voltage drops of the power source 1. As long as the second intermediate voltage V_{DC2} is that much lower than the voltage drops of the external power source 1 expected in a worst case scenario, the DC/DC module 4 can be designed as a simple voltage down converter. The grid voltage needs only to be down-converted to the second intermediate DC voltage V_{DC2} and no up-conversion is needed by the DC/DC module 4. In this embodiment the central control logic 41 is adapted to limit the current that is provided to each DC/DC module 4 such that the sum of the current multiplied with the input voltage of the input circuit 2 does not exceed the nominal power, respectively allowed short term peak power taken in by the input module 3. This ensures that the maximum power input provided by the external power source 2 is not exceeded and avoids that overcurrent protection devices of the external power source 2 are triggered. Additionally or alternatively the central control logic 41 may produce at a control output Co a control signal for controlling the power consumption of the input module 3, for example by the ay be designed with thyristors as rectifier diodes. Generally thyristors, silicon controlled rectifier, triacs, thyratrons, or other such gated diode-like devices can be controlled with a cutting angle control signal to go into and out of conduction at a predetermined phase of the AC waveform of the AC input signal. Changing the cutting angle controls the current that is admitted through the rectifier.

A second intermediate DC module 5 with an energy buffer module 6 is connected with its input to the output of the first DC/DC module 4. The second intermediate DC module 5 supplies an output switching circuit 7 with the buffered second intermediate voltage V_{DC2}. The output switching circuit 7 supplies a transformer 8 with currents for primary windings of the transformer 8. Secondary windings of the transformer 8 eventually generate the currents to charge the battery of an electric vehicle 9. The first intermediate DC/DC module 4, the second intermediate DC module 5 with an energy buffer module 6, the output switching circuit 7, and the transformer 8 logically form an output circuit, which according to its function is termed within this application as a charging module. The idea of the invention is that one or more charging modules, with its DC/DC converter 4 as an input circuit, can be connected to the first intermediate power rail 30.

The first intermediate DC circuit converts a first DC input voltage to a second DC output voltage which is different to the first DC input voltage. Therefore in this invention the first intermediate DC circuit may be also termed as a first DC/DC converter. In the following embodiments the input voltage of the second intermediate DC circuit and the output voltage of the second intermediate DC circuit are substantially the same. However, it is conceivable to have embodiments where the second intermediate DC circuit is designed as a second DC/DC converter.

For reason of conciseness Figure 1 shows only one of the three charging modules. All three charging modules are identical. Figure 2 shows the second intermediary circuit 5 of a charging module in more detail. Each second intermediate DC/DC circuit 5 is provided with a buffer capacitor 52 which smooths the ripples on the output current provided on a second intermediate DC rail 50 by the DC/DC converter 4. This buffer capacitor 52 may be chosen to have a capacity of 1500 micro Farad.

An energy buffer module 6 is also electrically connected with the second intermediate DC voltage rail 50 and provides additional energy if the current consumed by the output switching circuit 7 is higher than the current that is supplied by the respective DC/DC converter 4. The energy buffer module 6 may comprise as an energy buffer 60 a lithium-ion battery or a lithium-ion supercapacitor battery. The person skilled in the art readily appreciates that any kind of electrical storage element, that is able to provide sufficient capacity and current could be chosen as an energy buffer 60, as for example a redox flow battery. With the general set-up of this embodiment the energy buffer 60 should provide a discharge current peak of greater than 50 Amperes and should allow a charge current peak of greater than 10 Amperes. The capacity of the electric buffer 60 depends on the energy that the charging station 1 shall provide to the electric vehicle. With the power that were usual at the time of the application a capacity between 10 and 100 kWh is a reasonable choice. With higher charging powers of course the person skilled in the art would choose an electric buffer 60 with an adequate capacity. Due to its size the energy buffer 60 is arranged in an external buffer module 6. In a specific aspect of the invention a discharging resistor R of approximately 10 to 20 Ohms is arranged in close proximity to the energy buffer 60 inside the buffer module 6. By means of a discharging switch S₀ the discharging resistor R can be switched in parallel to the energy buffer 60. In contrast to the discharging resistor R the discharging switch S₀ is arranged in the second intermediate DC module 5 and controlled by second intermediate DC module control logic 51.

The second intermediate DC module control logic 51 measures by means of a current sensor 53 the current that flows into the corresponding output module 7, i.e. the sum of the current provided by the respective second intermediate DC module 5 and the current provided by the energy buffer 60. A voltage sensor 54 measures the voltage at the output 55 of the second intermediate DC circuit 5. A energy buffer current sensor 54 measures the current that flows from the second DC power rail 50 into the energy buffer 6, i.e. the charging current for the energy buffer 60, or in case the current flows from the energy buffer 60 to second DC rail 50 this energy buffer current sensor 54 measures the current that the energy buffer 60 supplies as a buffer current to the output 55 of the second intermediate DC module 5. By closing the discharging switch S₀ the energy buffer 60 discharges over the discharging resistor R. The person skilled in the art appreciates that during this test the first intermediate DC/DC module 4 has to be switched off. By measuring the discharging current with the discharging current sensor 54 the second intermediate DC module control logic 51 is able to evaluate the "health" of the energy buffer 60, i.e. how much capacity the energy buffer has lost due to aging effects. In this embodiment the energy buffer current sensor 54 is arranged in the second intermediate DC module 5. However it is evident that alternatively it may be also arrange in the energy buffer module 6.

Optionally the discharging resistor R is arranged in close proximity to the energy buffer 60 for enabling heat transfer from the discharging resistor R to the energy buffer 60. In this application the second intermediate DC module control logic 51 measures the temperature of the energy buffer 60 and compares the measured temperature with a minimum operation temperature of the energy buffer 60. In the event the measured temperature is lower than the operation temperature of the energy buffer 60 the second intermediate DC module control logic 51 connects the discharging resistor R with the discharging switch S₀ to the DC rail 50 and uses the discharging resistor R to heat the energy buffer 60 until the energy buffer 60 has reached its operation temperature. This heating is effectively powered by the power grid 2 via the first intermediate DC/DC module 4 with a power of approximately 250 W. The heating power may even be pulse modulated to adapt an adequate power as a function of the temperature of the energy buffer 60.

Optionally a heat sensor 61 communicates the temperature of the energy buffer to the second intermediate circuit control logic 51. In case no electric vehicle 9 is connected to the respective output module 7, all current provided by the respective first intermediate DC/DC module 4 flows into the energy buffer and re-charges the energy buffer 6. In this embodiment, a lithium battery has been chosen as an energy buffer 6 as at the time the lithium battery is able to provide a high discharge current at relatively low cost. Optionally the lithium battery may be equipped with a battery management system that ensures that all cells of the lithium -ion battery are on an equal voltage level. However, the person skilled in the art would choose the most appropriate energy buffer 6 for a special application. It is therefore also conceivable to choose a bank of super capacitors for the energy buffer 6, if costs are a less concern.

It was mentioned above that the second intermediate DC voltage V_{DC2} in this embodiment has been chosen to 420 volts to be sufficiently lower than expected voltage drops on the power grid 2. The second intermediate DC voltage V_{DC2} however also depends on the energy buffer 60 that has been chosen for the energy buffer modules 6. The concept of the first intermediate DC/DC module 4 and the second intermediate DC modules 5 allows a large range within the second intermediate DC voltage V_{DC2} can be set. It is for example possible to choose the second intermediate DC voltage V_{DC2} in-between 100 Volts and 430 Volts in order to accommodate different types of energy buffers 6.

Advantageously the central control logic 41 may also be adapted to limit the current provided to second DC/DC modules 5 and thus to limit the charging current of the energy buffer modules 60 for different types of energy buffers 60. The central logic 41 may provide a constant charging current to all second intermediate circuit 5 until the energy buffers have reached for example 90 percent of their capacity and then switch to so-called trickle charge for improving the life and capacity of the energy buffer 60. Alternatively, with Constant Current - Constant Voltage charging in a first phase the voltage is controlled such that a maximum current is not surpassed. As soon as a predetermined target voltage has been reached, the target voltage will be maintained. Consequently the charging current declines until the battery is fully charged and finally is substantially zero. The central logic 41 may alternatively limit the current provided to each second intermediate circuit 5 individually according to an internal charging strategy, for example by predominantly re-charging the energy buffer that has the highest charging level among all energy buffers 6 of a charging station. This strategy achieves the object to offer at least one reasonably full buffer 6 at all times. Other strategies are possible, for example always re-filling the buffer 6 with the lowest charge level among all buffers 6 of a charging station 1, which would ensure that all buffers are on a similar charging level.

The output switching circuit 7 converts the available energy into the electrical power that is requested by the electric vehicle 9. At the moment, several power options and socket varieties for recharging an electric vehicle have to be served. In order of increasing power most common sockets/plugs options are:
a) domestic socket, single phase 230V AC / 10 A / 2.3 kW
b) so-called blue caravan socket, single phase 230 V AC / 16 A / 3.6 kW
c) socket type CEE 16 A, three phase 400 V AC / 16 A / 11 KW
d) socket type CEE 32 A, three phase 400 V AC / 32 A / 22 KW
e) socket type CEE 63 A, three phase 400 V AC / 63 A / 43 KW
f) charging station type 1, 240 V AC / 16 A / 3.8 kW or 240 V AC / 24 A / 5.8 kW or 240 V AC / 30 A / 7.2 kW
g) charging station type 2, 400 V AC three phase, typically 2.6 kW / 11 kW / 22 kW / 43 kW
h) charging station CCS combo 2, DC 50 kW
i) charging station CHAdeMO, DC, typically 22 kW / 50 kW
j) charging station Tesla super charger, DC typically 135 kW

The length of time an electric vehicles batteries take to recharge is limited by the minimum rate between how many kilowatts (kW) the charging station can provide and how many the batteries of the car can accept. It seems that at the time of the application the term "slow charging" is used for charging a vehicles battery from empty to full in around eight hours at an approximate rate of 3kW, for example with a wall charger at home; the term "fast charging" is used for fully replenishing a vehicles batteries in approximately three to four hours at a rate of 5kW to 22kW; and the term "rapid charging" is used for a charging rate of 43kW to 100kW, which will replenish a vehicles battery to 80% in as little as 30 minutes. The flexible concept of the invention allows to arrange its modules and circuits to meet any of the requirements of the listed charging modes. As will be described further down below the flexible architecture of the invention allows to serve most, if not all of these modes and probably most modes that may still emerge.

The domestic options usually are passive chargers, e.g. the charging station does not exchange any information with the internal charger of the electric vehicle. For the more powerful charging modes usually the internal charger communicates with the charging station 1, for example over a dedicated signal wire using for example the so-called CAN bus protocol to control the power provided by the charging station 1.

In this embodiment, the input module 3 and three first intermediate DC/DC modules 4 are arranged in one module and each second intermediate DC/DC module and the respective output module 7 are paired in one module. The charging station 1 in this example therefore comes with one housing for the input module 3 and three first intermediate DC/DC modules 4 in the same housing and three housings each containing a second intermediate DC module 5 and an output module 7. Each lithium battery 6 is connected to its second intermediate DC module 5 and each transformer 8 is separately connected to its respective output module 7.

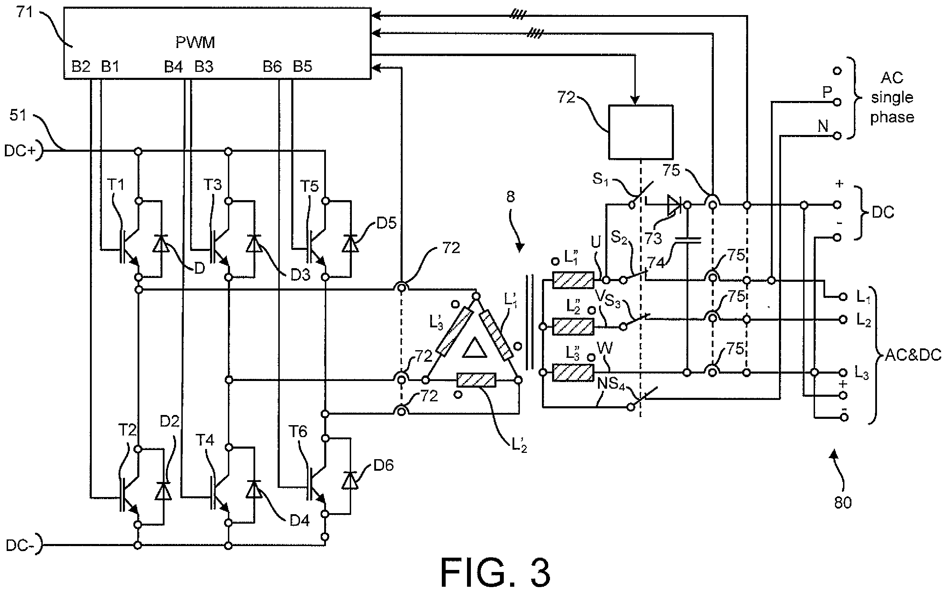

Turning to Figure 3 the output module 7 and its interaction with the galvanic isolating transformer 8 is described in more detail. The transformer 8 comprises three primary windings L'₁, L'₂, L'₃ and three secondary windings L"₁, L"₂, L"₃ . The output switching circuit 7 comprises six switching elements for controlling the current flow from the second positive intermediate DC rail 50 through the primary windings L'₁, L'₂, L'₃ back to the negative DC rail DC-. In this embodiment, the switching elements are insulated - gate bipolar transistors (IGBT) T₁, T₂, T₃, T₄, T₅, and T₆. IGBTs combine high efficiency and fast switching at high switching currents. Generally all power semiconductor switching elements with low switching losses, such as integrated gate-commutated thyristor (IGCT) are suitable as switching elements. The person skilled in the art will appreciate that measures should be taken to avoid heat generation. For example technologies may used such as IGBTs or MOSFETS embedded in a printed circuit port, which reduces the volume of the printed circuit ports and allows for an improved heat transfer (spreading the heat sources and/or reduced heat transfer resistance) from the back of the printed circuit board directly to a heat conducting housing, for example. With the high currents used in charging electric vehicles the presented charging units benefits extraordinarily from the use of silicium carbit technology, such as SiC IGBT and SiC MOSFET

Each transistor T₁, T₂, T₃, T₄, T₅, T₆ is protected by a free wheeler diode D₁, D₂, D₃, D₄, D₅, D₆ connected with their anode to the emitter of their respective transistor and with their cathode connected to the collector of their respective transistor. A pulse width modulation control circuit 71 generates six control signals B₁, B₂, B₃, B₄, B5, B₆ for controlling individually the base of each transistor T₁, T₂, T₃, T₄, T₅, T₆. As a function of the current flow created through the primary windings L'₁, L'₂, L'₃ the first secondary winding L"₁, produces a first output voltage V, the second secondary winding L"₂ produces a second output voltage V, and the third secondary winding L"₃ produces a third output voltage W. It should be noted that as a function of the control signals the first output voltage U, the second output voltage V, and the third output voltage W may be generated with a 120 degree phase offset to form a three-phase AC current, or only two voltages, for example at the second output V and the third output W might be generated leaving the first output basically zero potential. Optionally filter capacitors (not shown) may be connected either in a Y-formation or a Delta formation to the three secondary windings L"₁, L"₂, L"₃ . The filter capacitors usually would have a capacitance of 1 micro Farad.

An AC/DC mode selector 72 detects which charging voltage/current system is required by an electric vehicle 9 which is connected to the output module 7 and communicates to the pulse width modulation circuit 71 which control signals B₁, B₂, B₃, B₄, B5, B₆ to produce. Primary current sensors 71 are provide in each conductor leading to a primary winding L'₁, L'₂, L'₃ for measuring the current provided to each primary winding L'₁, L'₂, L'₃. The sensor signals of the primary current sensors 71 are forwarded to the pulse width modulation circuit 71 in order to be able to control the current consumed by each primary winding L'₁, L'₂, L'₃. Alternatively or additionally secondary current sensors 75 are provided for each secondary conductors U, V, W, N in order to measure the current in each of the secondary conductors U, V, W, N and to provide the information to the pulse with modulation control 71. With this information the pulse with modulation control circuit 71 by adjusting the switch on/switch off time of the control signals B₁, B₂, B₃, B₄, B5, B₆ can control the voltage/current to be generated by each secondary windings L"₁, L"₂, L"₃.

The detected AC/DC mode also controls a first switch S₁, a second switch S₂, a third switch S₃ and a fourth switch S₄ to connect or disconnect the first output voltage U, the second output voltage V, and the third output voltage W to respectively from the pins of the sockets, respectively plugs of the charging station 1.

In case a one phase AC current is required, the AC/DC mode selector connects with the second switch S₂ the first output voltage U to a line conductor pin P of a AC single phase socket/plug. The neutral conductor N is permanently connected to a neutral conductor pin N of a single phase socket/plug. In this mode the first switch and the third switch are in off position. The plugs served by single phase AC are for example a AC plug according to IEC 62196 Type 2 or a combined AC/DC plug CCS according to IEC 62196. It is evident that also domestic socket outlet or a blue caravan type socket outlet could be served by the charging station of the invention. The electric buffer would allow for slow charging several electric vehicles at the same time at a low power outlet, for example from a lamp post.

In case a three-phase AC current is required, the AC/DC mode selector 72 connects all three secondary transformer windings L"₁, L"₂, L"₃ to the respective pins Li, L₂, L₃ of the respective charging plug. In this embodiment the second switch S₂ and the third switch S₃ are in connected position and the first switch S₁ is in a non-connected position.

In case the AC/DC mode selector 72 detects that the connected electric vehicle requires a DC current, the AC/DC mode selector 72 disconnects with the second switch S₂ the first secondary winding L"₁ from the output conductor U, and disconnects with the third switch S₃ the second secondary winding L"₂ from the second output conductor V. By means of the first switch S₁ a fly back filter 73, 74 is connected to the first secondary winding L"₁. In this embodiment the fly back filter 73, 74 comprises a fly back diode 73 and a fly back capacitor 74. The fly back diode 73 is connected with its anode to the first secondary winding and L"₁ and with its cathode to the DC output of the vehicle interface 80. The fly back capacitor 74 is connected with one of its terminal to the DC charging terminal DCₒᵤₜ+ of respective plugs of the charging plugs and with its other terminal to the second secondary winding L"₂, which at the same time forms the negative charging DC charging terminal DCₒᵤₜ-. In this embodiment the winding direction of the first secondary winding L"₁ is opposite to the winding direction of the second secondary winding L"₂, which is indicated in Fig. 2 by the dots close to the winding symbols. With the opposite windings it is possible to invert the voltage vector of the second secondary winding L"₂ which allows almost to double the voltage that is available between the terminal of the first secondary winding L"1 and the terminal of the second secondary winding L"₂. As rapid DC charging systems need voltages up to 800 Volts this allows to achieve this voltage with a transformer that usually would produce 400 Volts three phase voltages. However, to produce 400 Volts three phase voltages the phase of the control signals switching the switching elements has to be reversed to compensate for the different winding directions. Alternatively all secondary windings could be in the same winding direction and the phase of the control signals for the switching elements is adapted accordingly when the charging station is in DC charging mode. in another embodiment an auxiliary switch (not shown) may be used to connect the terminal of the second secondary winding L"₂ with the terminal of the third secondary winding L"₃ in case an even higher DC output voltage has to be achieved.

The pulse with modulation control 71 also receives a mode signal from the AC/DC mode selector 72 and controls the transistors T₁, T₂, T₃, T₄, T₅, T₆, such that either a one phase AC current, a three phase AC current or a DC current at the interface conductors U, V, W, N. The control signals generated by the pulse with modulation control 71 in case of a three-phase AC mode control the transistors T₁, T₂, T₃, T₄, T₅, T₆ are phase-shifted by 120°, the current through the primary windings L'₁, L'₂, L'₃ are pulse with modulated in order to control the charging current on the secondary windings of the transformer. The primary windings L'₁, L'₂, L'₃ of the transformer Tᵣ are connected in a triangle and the secondary windings L"₁, L"₂, L"₃ of the transformer Tᵣ are connected in a start configuration, whereby the common connection of all three winding ends forms the interface conductor N. The transformer Tᵣ thus achieves a galvanic isolation of the charging current provided at the charging interface from the electric grid 1. It also reduces EMI because the secondary windings L"₁, L"₂, L"₃ of the transformer Tᵣ is prohibited from introducing high frequency earth currents.

If only one output voltage is generated to supply a single primary winding of a transformer 8 the number n of phases could be chosen as one (n = 1). Such an embodiment could use for example a forward converter. However a forward converter lacks efficiency and may not be suited very well for applications that shall provide a charging power above 250 Watts. Alternatively other converters may be used which use two phases (n=2) or three phases (n=3). As three phase transformers are easily available the following embodiments demonstrate the use of a three phase transformer in connection with push pull converters.

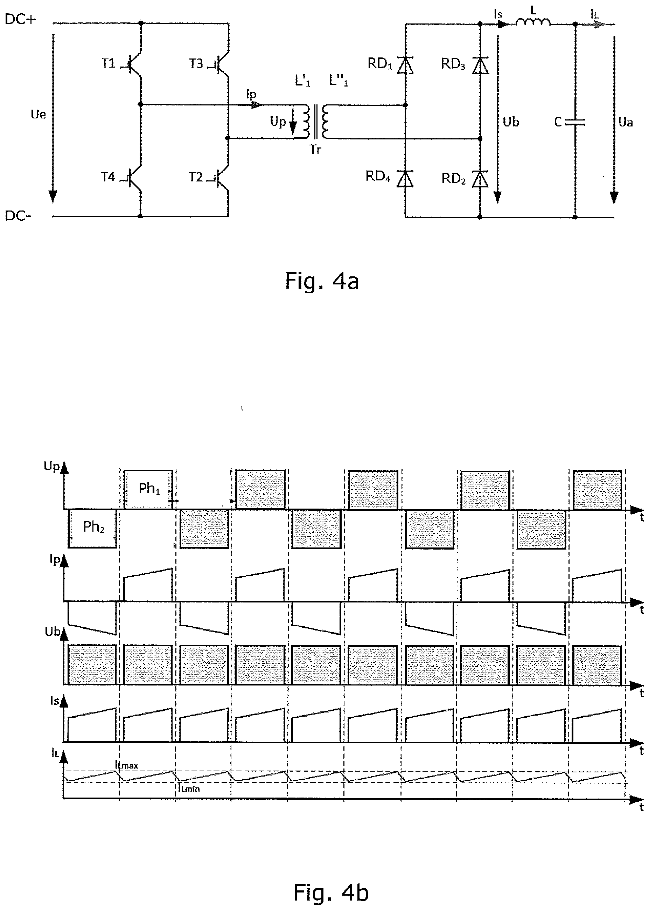

Fig. 4a shows as an alternative to the fly back converter a full bridge push and pull converter operating a transformer Tr with a single primary winding L'₁ and a single secondary winding L"₂ with two different phases of current (n = 2) flowing through the single primary winding L'₁ for producing a DC charging current I_{L} at a charging voltage Ua. Fig. 4b shows voltage and current diagrams for the elements of the full bridge push and pull converter. The full bridge push and pull converter is connected to the second intermediate positive DC rail DC+ and the second intermediate negative DC rail DC-. The voltage between the second intermediate positive DC rail DC+ and the second intermediate negative DC rail DC- is indicated in Fig 4a and Fig. 4b as Ue. In case of a full bridge push and pull converter the output module 7 comprises four switching elements T₁, T₂, T₃, and T₄ arranged as a so-called H-bridge. The output module 7 generates four control signals B₁, B₂, B₃, B₄ such that in a first phase Ph1 the first switching element T1 and the second switching element T2 are in conductive mode and the third switching element T3 and the fourth switching element T4 are in non-conductive, i.e. blocked mode. This allows for a current to flow from the second intermediate positive DC rail DC+ via the first switching element T1, the first primary winding L'1, the second switching element T2 to the second intermediate negative DC rail DC-. In a second phase the output module 7 sets the first switching element T1 and the second switching element T2 in non-conductive, i.e. blocked mode and the third switching element T3 and the fourth switching element T4 in conductive. This allows for a current to flow from the second intermediate positive DC rail DC+ via the third switching element T3, the first primary winding L'1, the fourth switching element T4 to the second intermediate negative DC rail DC-, but this time the current passes through the primary winding L'1, compared to the first phase, in opposite direction. Similarly to the previous embodiment the switching elements are insulated - gate bipolar transistors (IGBT) T1, T2, T3, and T4. Preferably each transistor T1, T2, T3, T4, is protected by a free wheeler diode D₁, D₂, D₃, D₄ connected with their anode to the emitter of their respective transistor and with their cathode connected to the collector of their respective transistor. However for reasons of conciseness the free wheeler diode D₁, D₂, D₃, D₄ are not shown in Fig. 4a.

The first and the second phase Ph2 are generated alternatingly so that the alternating current I_{P} which flows through the primary winding L'₁ creates a current with alternating direction in the secondary winding L"₁. Between the switching phases a gap has to be maintained, otherwise the switching elements may be conductive at the same time, which would be bare the risk to destroy semiconductor based switching elements. A bridge rectifier comprising a first rectifier diode RD₁, a second rectifier diode RD₂, a third rectifier diode RD₃, and a fourth rectifier diode RD₄ rectify the current of the secondary into a DC current Is, which clearly shows a saw tooth like ramp. An output voltage of the bridge rectifier RD₁, RD₂, RD₃, RD₄ is depicted in the diagrams as Ub. By means of an inductance L and a smoothing capacitor C the gaps in the rectified DC current Is and the saw tooth like ripples can be smoothened so that the charging current fluctuates between a lower current amplitude I_{Lmin} and a upper current amplitude I_{Lmax}. Effectively the inductor L and the smoothing capacitor C perform as a low pass filter of second order.

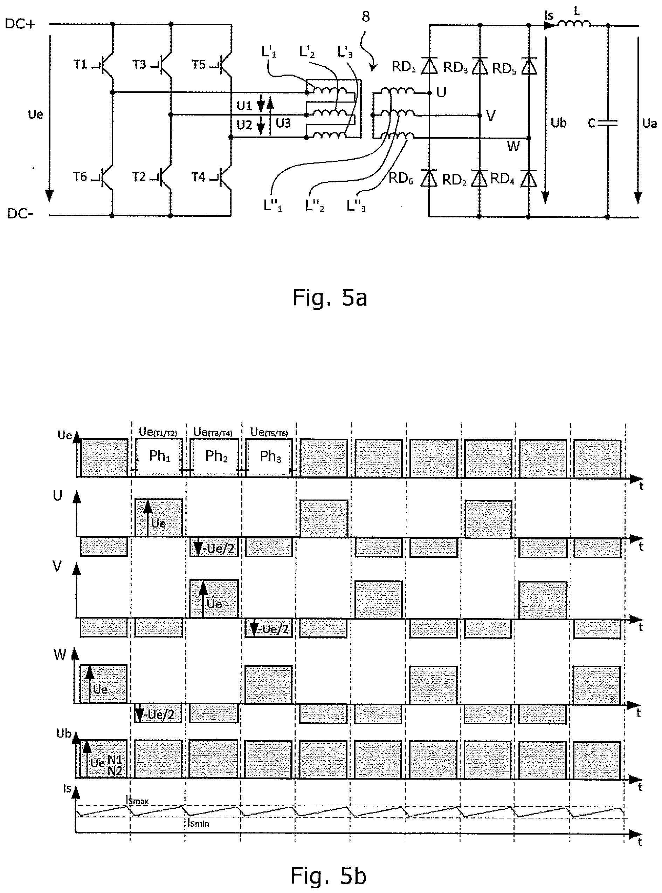

In another embodiment, as shown in Fig. 5, a three phase transformer 8 is used as in the embodiment shown in Fig. 3. The primary windings L'₁, L'₂, L'₃ of three phase transformer 8 are exactly as in the embodiment shown in Fig. 3 in a triangle configuration and the secondary winding L"₁, L"₂, L"₃ of three phase transformer 8 are exactly as in the embodiment shown in Fig. 3 in a star configuration. Similar to the embodiment shown in Fig. 3, the output module 7 generates three alternating control signals B₁, B₂, B₃, B₄, B₅, B₆, which operate the switching elements in a B6H configuration. In a first phase Ph1 the first switching element T1 and the second switching element T2 are in conductive mode and the third switching element T3, the fourth switching element T4, the fifth switching element T5, and the sixth switching elements T6 are in non-conductive, i.e. blocked mode. This allows for a current to flow from the second intermediate positive DC rail DC+ via the first switching element T1, the first primary winding L'1, the second switching element T2 to the second intermediate negative DC rail DC-, generating in the first secondary winding a voltage U = Ue. At the same time in the first phase a parallel current is flowing from the second intermediate positive DC rail DC+ via the first switching element T1, the third primary winding L'₃, the second primary winding L'₂, the second switching element T2 to the second intermediate negative DC rail DC-. As this current flows in an opposite direction through the third primary winding L'₃ and the second primary winding L'₂, the generated voltage in the third secondary winding L"3 and the second secondary winding L"2 is in the opposite direction in comparison to the voltage U of the first secondary winding L"₁. In addition hereto, as are connected in line, the voltage W = -Ue/2 generated at the the third primary winding L'₃ and the voltage V = -Ue/2 generated at the second primary winding L'₂ are only half of the amplitude of the voltage U = Ue generated at the first secondary winding L"₁.

Similarly in a second phase Ph2 the third switching element T3 and the fourth switching element T4 are in conductive mode and the first switching element T1, the second switching element T2, the fifth switching element T5, and the sixth switching elements T6 are in non-conductive, i.e. blocked mode. This allows in the second phase Ph2 for a current to flow from the second intermediate positive DC rail DC+ via the third switching element T3, the second primary winding L'₂, the fourth switching element T4 to the second intermediate negative DC rail DC-, generating in the second secondary winding a voltage V = Ue. At the same time in the second phase a parallel current is flowing from the second intermediate positive DC rail DC+ via the third switching element T3, the first primary winding L'₁, the third primary winding L'₃, the fourth switching element T2 to the second intermediate negative DC rail DC-. Similar to the first phase Ph1, in the second phase Ph2 the generated voltage V of the second secondary winding L"2 has the amplitude Ue and the voltage W of the third secondary winding L"3 both are - Ue/2.

Similarly in a third phase Ph3 the fifth switching element T5 and the sixth switching element T6 are in conductive mode and the first switching element T1, the second switching element T2, the third switching element T3, and the fourth switching element T4 are in non-conductive, i.e. blocked mode. This allows in the second phase Ph3 for a current to flow from the second intermediate positive DC rail DC+ via the fifth switching element T5, the third primary winding L'₃, the sixth switching element T6 to the second intermediate negative DC rail DC-, generating in the third secondary winding a voltage W = Ue. At the same time in the third phase a parallel current is flowing from the second intermediate positive DC rail DC+ via the fifth switching element T5, the second primary winding L'₂, the first primary winding L'₁, the sixth switching element T6 to the second intermediate negative DC rail DC-. Similar to the first and second phase Ph1, Ph2, in the third phase Ph3 the generated voltage U of the first secondary winding L"1 and the voltage V of the second secondary winding L"2 both are -Ue/2.

In case the ripples of the resulting charging current needs further reduction a transformer with more than three primary windings and an adequate number of secondary windings may be used. This allows also for distributing the generated power on more than three windings, thus further reducing temperature and other problems.

In order to improve the ripples of the DC voltage even more than three phases (n greater 3) may be used.

In the embodiments with the push pull converter similar to the fly back converter the charging station may have a mode selector circuit (not shown in Fig. 4a or Fig. 5a) which is configured to receive a mode signal which is indicative whether the electric energy storage requires AC current or DC current. As a consequence in DC charging mode the mode selector connects the bridge rectifier (RD₁, RD₂, RD₃, RD₄) to the at least one secondary winding of the n-phase transformer and in AC charging mode disconnects the bridge rectifier from the at least one secondary winding of the n-phase transformer. Thus in AC charging mode the transformer 8 may still be used for generating a AC charging voltage/current.

In the embodiments, there are three DC/DC converter 4, each of which powers a charging module. The number of DC/DC converter 4 and charging modules may vary, there may be embodiments where the number of DC/DC converter 4 and charging modules is less than three, i.e. one or two. Alternatively in other embodiments the number of DC/DC converter and charging modules could be chosen to be higher than the number of three. There is no logical limit to the number of DC/DC converter 4 and charging modules that can be supplied by the input circuit 3 as long as any limitation of the power source does not prevent the energy buffers from being re-charged in a reasonable time. For example assuming a company with regular working hours and closed at night has deployed on their business car park charging stations 1 according to the invention. In a worst case scenario all charging buffers are empty at the end of a business day when all employees have left with their cars the company's parking site. In such a scenario the charging stations 1 should be able to re-charge all energy-buffers before the first car from an employee or a client arrives the next morning.

It should be noted that the term charging station is used throughout this description to refer to any charger that is suitable for charging at least one electric vehicle. Sometimes the term charging point is used to indicate that only one electric vehicle can be re-charged at a time, for example in a domestic garage from a charger fixed to the wall of the garage, and the term charging station seems to be used when more than one electric vehicles can be charged simultaneously at one site. It is evident that the term charging station as used in this description should be not restricted to the number of electric vehicles to be charged. Therefore in this description the term charging stations should be interpreted to embrace charging points.

The embodiment has been described with a public power grid as a power source. The person skilled in the art will appreciated that the invention is not limited to public power grids, but is also applicable for singular power sources and/or non-public power, such as solar panels, water turbines or wind turbines.

### Table of reference numerals

- 1: charging station
- 2: power source
- 3: input module
- 30: first intermediate DC rail
- 4: DC/DC converter
- 41: control circuit
- 42: first current sensors
- 5: second intermediate circuit
- 50: second intermediate DC rail
- 6: energy buffer module
- 60: energy buffer
- 7: output switching circuit
- 70: pulse width modulation control circuit
- 71: primary current sensors
- 72: mode selector
- 73: flyback diode
- 74: flyback capacitor
- 75: secondary current sensors
- 8: transformer
- 80: charging interface
- 9: electric vehicle
- L'₁, L'₂, L'₃: primary windings
- L"₁, L"₂, L"₃: secondary windings

## Claims

1. Charging station (1) for electric energy storages of electric vehicles (9) comprising :
— an input circuit (3) for connecting the charging station (1) to an electrical power source (2);
— an output circuit (8) for connecting the charging station (1) via charging plugs (9a, 9b, 9c) to the electric energy storages of electric vehicles (9);
— an electrical direct current charging buffer (6) with a positive terminal and a negative terminal configured to be charged by the electrical power source (2);
— a n-phase transformer for galvanic isolation of the input circuit from the output circuit (8) with primary windings (L'₁, L'₂, L'₃) on the input circuit side and secondary windings (L"₁, L"₂, L"₃) on the output circuit side;
— a sensor for sensing at least one of voltage or current consumed during charging the electrical operated vehicle providing a sensor signal that is indicative of the sensed voltage and/or current;
— the output circuit (8) being connected to a switching circuit (7);
— the switching circuit (7) adapted for periodically connecting the positive terminal of the charging buffer and the negative terminal of the charging buffer to the primary windings (L'₁, L'₂, L'₃); and
— control means (71) for receiving the sensor signal and configured to control the switching circuit (7) to provide a predetermined voltage and/or charging current,
**characterized in that** the charging station further comprises a mode selector circut (72) and a bridge rectifier (RD1, RD2, RD3, RD4), wherein the mode selector circuit (72) is configured to receive a mode signal which is indicative whether the electric energy storage requires AC current or DC current and wherein the mode selector circuit (72) in DC charging mode is configured to connect the bridge rectifier (RD₁, RD₂, RD₃, RD₄) to the at least one secondary winding (L"₁) of the n-phase transformer and in AC charging mode is configured to disconnect the bridge rectifier (RD₁, RD₂, RD₃, RD₄) from the at least one secondary winding (L"₁) of the n-phase transformer.

2. The charging station of claim 1 wherein the control means (71) provide a pulse width modulated signal for controlling the switching circuit (7).

3. The charging station of claim 1 or 2 wherein the secondary windings (L"₁, L"₂, L"₃) of the n-phase transformer are connected in a Y-configuration providing a neutral line (N) and n secondary winding ends(U, V, W).

4. The charging station of any of claims 1, 2, or 3 wherein a third secondary winding end (V) is connected to the second secondary winding end (W).

5. The charging station of any of claims 1, 2, 3, or 4 wherein the winding direction of the second secondary winding (L"₃) is the opposite to the winding direction of the first secondary winding (L"₁).

6. The charging station of any claims 1, 2, 3, 4 or 5 wherein at least one secondary winding (L"₁) of the n-phase transformer is connected to a fly back filter for providing a DC charging current on DC connectors of the charging plugs.

7. The charging station of claim 4 wherein one winding end (U) is connected to one fly-back filter input and another fly-back filter input is connected to the neutral line (N)

8. The charging station of claim 7 wherein a first secondary winding end (U) is connected to one fly-back filter input and another fly-back filter input is connected to a second secondary winding end (W).

9. The charging station of one of any of claims 6, 7 or 8 wherein the fly back filter comprises a diode (73).

10. The charging station of any of claims 6, 7, 8 or 9 wherein the fly back filter comprises a capacitor (74).

11. The charging station of any one of claims 6 to 10 wherein a mode selector circuit (72) is configured to receive a mode signal which is indicative whether the electric energy storage requires AC current or DC current and wherein the mode selector (72) in DC charging mode connects the fly back filter to the at least one secondary winding (L"₁) of the n-phase transformer and in AC charging mode disconnects the fly back filter from the at least one secondary winding (L"₁) of the n-phase transformer.

12. The charging station of any of claims 1, 2, 3, 4 or 5 wherein the secondary windings of the n-phase transformer are connected to a bridge rectifier (RD₁, RD₂, RD₃, RD₄) and wherein the switching circuit is adapted to provide switching signals in order to control the n-phase transformer (8) as a push-pull converter (Fig. 4a, Fig. 5).

13. The charging station of any of claim 1 to 12 wherein in AC charging mode the switching control circuit (71) is configured to modify the phase of at least one pair of signals of the switching control signals (B₁, B₂, B₃, B₄, B₅, B₅, B₆) in relation to the other pairs of switching signals to compensate for the opposite winding direction of the second secondary winding (L"₂).

14. Method for providing a charging current to electric energy storages of electric vehicles at a charging interface comprising the steps of:
— receiving input power from an electrical power source;
— buffering the received input power in an electrical direct current charging buffer;
— galvanically isolating the electric potential of the electrical power source from the charging interface;
— sensing at least one of voltage or current consumed during charging the energy storage of an electric vehicle;
— periodically connecting a positive terminal of the charging buffer and a negative terminal of the charging buffer to the primary windings (L'i, L'2, L'3) of the transformer;
— receiving the sensor signal and controlling the switching circuit to provide a predetermined voltage and/or charging current at a charging interface,
**characterized in that** a mode selector circuit (72) is configured to receive a mode signal which is indicative whether the electric energy storage requires AC current or DC current and wherein the mode selector (72) in DC charging mode connects a bridge rectifier (RD₁, RD₂, 21 RD₃, RD₄) to the at least one secondary winding (L"₁) of the n-phase transformer and in AC charging mode disconnects the bridge rectifier (RD₁, RD₂, RD₃, RD₄) from the at least one secondary winding (L"₁) of the n-phase transformer.

## Patentansprüche

1. Ladestation (1) für elektrische Energiespeicher von Elektrofahrzeugen (9), umfassend:
— eine Eingangsschaltung (3) zum Verbinden der Ladestation (1) mit einer elektrischen Leistungsquelle (2);
— eine Ausgangsschaltung (8) zum Verbinden der Ladestation (1) über Ladestecker (9a, 9b, 9c) mit dem elektrischen Energiespeicher von Elektrofahrzeugen (9);
— einen elektrischen Gleichstromladepuffer (6) mit einem positiven Anschluss und einem negativen Anschluss, der dazu konfiguriert ist, durch die elektrische Leistungsquelle (2) aufgeladen zu werden;
— einen n-Phasentransformator zur galvanischen Isolation der Eingangsschaltung von der Ausgangsschaltung (8) mit Primärwicklungen (L'₁, L'₂, L'₃) auf der Eingangsschaltungsseite und Sekundärwicklungen (L"₁, L"₂, L"₃) auf der Ausgangsschaltungsseite;
— einen Sensor zum Messen von mindestens einem von Spannung oder Strom, die bzw. der beim Aufladen des elektrisch betriebenen Fahrzeugs verbraucht wird, der ein Sensorsignal bereitstellt, das die gemessene Spannung und/oder den gemessenen Strom angibt;
— wobei die Ausgangsschaltung (8) mit einem Schaltkreis (7) verbunden ist;
— wobei der Schaltkreis (7) dazu ausgelegt ist, den positiven Anschluss des Ladepuffers und den negativen Anschluss des Ladepuffers regelmäßig mit den Primärwicklungen (L'₁, L'₂, L'₃) zu verbinden; und
— ein Steuermittel (71) zum Empfangen des Sensorsignals, das dazu konfiguriert ist, den Schaltkreis (7) zu steuern, um eine vorgegebene Spannung und/oder einen vorgegebenen Ladestrom bereitzustellen,
**dadurch gekennzeichnet, dass** die Ladestation ferner eine Modusauswahlschaltung (72) und einen Brückengleichrichter (RD₁, RD₂, RD₃, RD₄) umfasst, wobei die Modusauswahlschaltung (72) dazu konfiguriert ist, ein Modussignal zu empfangen, das angibt, ob der elektrische Energiespeicher Wechselstrom oder Gleichstrom benötigt, und wobei die Modusauswahlschaltung (72) im Gleichstromlademodus dazu konfiguriert ist, den Brückengleichrichter (RD₁, RD₂, RD₃, RD₄) mit der mindestens einen Sekundärwicklung (L"₁) des n-Phasentransformators zu verbinden, und im Wechselstromlademodus dazu konfiguriert ist, den Brückengleichrichter (RD₁, RD₂, RD₃, RD₄) von der mindestens einen Sekundärwicklung (L"₁) des n-Phasentransformators zu trennen.

2. Ladestation nach Anspruch 1, wobei das Steuermittel (71) ein Pulsweitenmodulationssignal zum Steuern des Schaltkreises (7) bereitstellt.

3. Ladestation nach Anspruch 1 oder 2, wobei die Sekundärwicklungen (L"₁, L"₂, L"₃) des n-Phasentransformators in einer Y-Konfiguration verbunden sind, die eine Neutralleitung (N) und n Sekundärwicklungsenden (U, V, W) bereitstellt.

4. Ladestation nach einem der Ansprüche 1, 2 oder 3, wobei ein drittes Sekundärwicklungsende (V) mit dem zweiten Sekundärwicklungsende (W) verbunden ist.

5. Ladestation nach einem der Ansprüche 1, 2, 3 oder 4, wobei die Wicklungsrichtung der zweiten Sekundärwicklung (L"₃) der Wicklungsrichtung zur ersten Sekundärwicklung (L"₁) entgegengesetzt ist.

6. Ladestation nach beliebigen Ansprüchen 1, 2, 3, 4 oder 5, wobei mindestens eine Sekundärwicklung (L"₁) des n-Phasentransformators mit einem Rückstellfilter zum Bereitstellen eines Ladegleichstroms an Gleichstromsteckverbindern der Ladestecker verbunden ist.

7. Ladestation nach Anspruch 4, wobei ein Wicklungsende (U) mit einem Rückstellfiltereingang verbunden ist und ein anderer Rückstellfiltereingang mit der Neutralleitung (N) verbunden ist.

8. Ladestation nach Anspruch 7, wobei ein erstes Sekundärwicklungsende (U) mit einem Rückstellfiltereingang verbunden ist und ein anderer Rückstellfiltereingang mit einem zweiten Sekundärwicklungsende (W) verbunden ist.

9. Ladestation nach einem der Ansprüche 6, 7 oder 8, wobei das Rückstellfilter eine Diode (73) umfasst.

10. Ladestation nach einem der Ansprüche 6, 7, 8 oder 9, wobei das Rückstellfilter einen Kondensator (74) umfasst.

11. Ladestation nach einem der Ansprüche 6 bis 10, wobei eine Modusauswahlschaltung (72) dazu konfiguriert ist, ein Modussignal zu empfangen, das angibt, ob der elektrische Energiespeicher Wechselstrom oder Gleichstrom benötigt, und wobei die Modusauswahlschaltung (72) im Gleichstromlademodus das Rückstellfilter mit der mindestens einen Sekundärwicklung (L"₁) des n-Phasentransformators verbindet und im Wechselstromlademodus das Rückstellfilter von der mindestens einen Sekundärwicklung (L"₁) des n-Phasentransformators trennt.

12. Ladestation nach einem der Ansprüche 1, 2, 3, 4 oder 5, wobei die Sekundärwicklungen des n-Phasentransformators mit einem Brückengleichrichter (RD₁, RD₂, RD₃, RD₄) verbunden sind und wobei der Schaltkreis dazu ausgelegt ist, Schaltsignale bereitzustellen, um den n-Phasentransformator (8) als einen Push-Pull-Wandler (Fig. 4a, Fig. 5) zu steuern.

13. Ladestation nach einem der Ansprüche 1 bis 12, wobei die Schaltsteuerschaltung (71) dazu konfiguriert ist, die Phase von mindestens einem Paar Signale der Schaltsteuersignale (B₁, B₂, B₃, B₄, B₅, B₅, B₆) in Beziehung zu den anderen Paaren Schaltsignale zu modifizieren, um die entgegengesetzte Wicklungsrichtung der zweiten Sekundärwicklung (L"₂) zu kompensieren.

14. Verfahren zum Bereitstellen eines Ladestroms an elektrische Energiespeicher von Elektrofahrzeugen an einer Ladeschnittstelle, folgende Schritte umfassend:
— Aufnehmen von Eingangsleistung von einer elektrischen Leistungsquelle;
— Puffern der aufgenommenen Eingangsleistung in einem Gleichstromladepuffer;
— galvanisches Isolieren des elektrischen Potenzials der elektrischen Leistungsquelle von der Ladeschnittstelle;
— Messen von mindestens einem von Spannung oder Strom, die bzw. der beim Aufladen des elektrisch betriebenen Fahrzeugs verbraucht wird;
— regelmäßiges Verbinden eines positiven Anschlusses des Ladepuffers und eines negativen Anschlusses des Ladepuffers mit den Primärwicklungen (L'₁, L'₂, L'₃) des Transformators;
— Empfangen des Sensorsignals und Steuern des Schaltkreises zum Bereitstellen einer vorgegebenen Spannung und/oder eines vorgegebenen Ladestroms an einer Ladeschnittstelle,
**dadurch gekennzeichnet, dass** eine Modusauswahlschaltung (72) dazu konfiguriert ist, ein Modussignal zu empfangen, das angibt, ob der elektrische Energiespeicher Wechselstrom oder Gleichstrom benötigt, und wobei die Modusauswahlschaltung (72) im Gleichstromlademodus den Brückengleichrichter (RD₁, RD₂, RD₃, RD₄) mit der mindestens einen Sekundärwicklung (L"₁) des n-Phasentransformators verbindet und im Wechselstromlademodus den Brückengleichrichter (RD₁, RD₂, RD₃, RD₄) von der mindestens einen Sekundärwicklung (L"₁) des n-Phasentransformators trennt.

## Revendications

1. Borne de recharge (1) pour des batteries électriques de véhicules électriques (9) comprenant :
- un circuit d'entrée (3) pour brancher la borne de re-charge (1) sur une source d'alimentation électrique (2),
- un circuit de sortie (8) pour brancher la borne de re-charge (1) par des broches de branchement (9a, 9b, 9c) sur les batteries électriques de véhicules électriques (9),
- un tampon de charge électrique à courant continu (6) avec une borne positive et une borne négative, configuré pour être chargé par la source l'alimentation électrique (2),
- un transformateur à n-phases d'isolation galvanique du circuit d'entrée par rapport au circuit de sortie (8) avec des enroulements primaires (L'₁, L'₂, L'₃) sur le côté du circuit d'entrée et des enroulements secondaires (L"₁, L"₂, L"₃) sur le côté du circuit de sortie,
- un capteur pour détecter au moins une tension ou une intensité consommée pendant la charge du véhicule électrique fournissant un signal de capteur qui donne la tension détectée et/ou l'intensité détectée,
- le circuit de sortie (8) étant relié à un circuit de commutation (7),
- le circuit de commutation (7) étant adapté pour brancher périodiquement la borne positive du tampon de charge et la borne négative du tampon de charge sur les enroulements primaires (L'₁, L'₂, L'₃), et
- un moyen de commande (71) recevant le signal de capteur et configuré pour commander le circuit de commutation (7) pour fournir une tension prédéterminée et/ou une intensité de charge prédéterminée,
borne de recharge **caractérisée en ce que**
elle comprend en outre un circuit sélecteur de mode (72) et un pont redresseur (RD₁, RD₂, RD₃, RD₄),
le circuit sélecteur de mode (72) étant configuré pour recevoir un signal de mode qui indique si la batterie électrique demande du courant alternatif ou du courant continu, et
le circuit sélecteur de mode (72) en mode de charge en courant continu est configuré pour brancher le pont redresseur (RD₁, RD₂, RD₃, RD₄) sur au moins un enroulement secondaire (L''₁) du transformateur à
n-phases et en mode de charge en courant alternatif, pour couper le pont redresseur (RD₁, RD₂, RD₃, RD₄) d'au moins un enroulement secondaire (L''₁) du transformateur à n-phases.

2. Borne de recharge selon la revendication 1,
dans laquelle
le moyen de commande (71) fournit un signal à modulation de largeur d'impulsions pour commander le circuit de commutation (7).

3. Borne de recharge selon la revendication 1 ou 2,
dans laquelle
les enroulements secondaires (L''₁, L"₂, L''₃) du transformateur à n-phases sont branchés en configuration Y donnant une ligne neutre (N) et n extrémités d'enroulements secondaires (U, V, W).

4. Borne de recharge selon l'une quelconque des revendications 1, 2 ou 3,
dans laquelle
la troisième extrémité d'enroulement secondaire (V) est reliée à la seconde extrémité d'enroulement secondaire (W).

5. Borne de recharge selon l'une quelconque des revendications 1, 2, 3 ou 4,
dans laquelle
le sens de l'enroulement de l'enroulement secondaire (L"₃) est opposé au sens d'enroulement du premier enroulement secondaire (L''₁).

6. Borne de recharge selon l'une quelconque des revendications 1, 2, 3, 4 ou 5,
dans laquelle
au moins un enroulement secondaire (L''₁) du transformateur à n-phases est relié à un filtre antiretour pour fournir un courant de charge, continu à des connecteurs de courant continu des prises de recharge.

7. Borne de recharge selon la revendication 4,
dans laquelle
une extrémité d'enroulement (U) est reliée à un filtre antiretour d'entrée et un autre filtre antiretour d'entrée est relié à la ligne neutre (N).

8. Borne de recharge selon la revendication 7,
dans laquelle
une première extrémité d'enroulement secondaire (U) est reliée à un filtre d'entrée antiretour et une autre entrée de filtre antiretour est reliée à une seconde extrémité d'enroulement secondaire (W).

9. Borne de recharge selon l'une quelconque des revendications 6, 7 ou 8,
dans laquelle
le filtre antiretour comprend une diode (73).

10. Borne de recharge selon l'une quelconque des revendications 6, 7, 8 ou 9,
dans laquelle
le filtre antiretour comprend un condensateur (74).

11. Borne de recharge selon l'une quelconque des revendications 6
à 10,
dans lequel
un circuit sélecteur de mode (72) est configuré pour recevoir un signal de mode indiquant si la batterie électrique demande du courant alternatif ou du courant continu, et
le sélecteur de mode (72) en mode de charge en courant continu, relie le filtre antiretour à au moins un enroulement secondaire (L''₁) du transformateur à n-phases et en mode de charge en courant alternatif, il coupe le filtre antiretour d'au moins un enroulement secondaire (L''₁) du transformateur à n-phases.

12. Borne de recharge selon l'une quelconque des revendications 1, 2, 3, 4 ou 5,
dans lequel
les enroulements secondaires du transformateur à n-phases sont reliés à un pont redresseur (RD₁, RD₂, RD₃, RD₄), et
le circuit de commutation fournit des signaux de commutation pour commander le transformateur à n-phases (8) comme convertisseur push-pull (Fig.4a, Fig. 5).

13. Borne de recharge selon l'une quelconque des revendications
1 à 12,
dans lequel
en mode de charge en courant alternatif, le circuit de commande de commutation (71) est configuré pour modifier la phase d'au moins une paire de signaux de commande de commutation (B₁, B₂, B₃, B₄, B₅, B₆), en relation avec l'autre paire de signaux de commutation pour compenser le sens d'enroulement opposé du second enroulement secondaire (L"₂) .

14. Procédé pour fournir un courant de charge à des batteries électriques de véhicules électriques dans une interface de charge comprenant les étapes consistant à :
- recevoir une puissance d'entrée d'une source d'alimentation électrique,
- stocker la puissance d'entrée reçue dans un tampon de charge électrique à courant continu,
- isoler galvaniquement le potentiel électrique de la seconde source d'alimentation électrique par rapport à l'interface de charge,
- détecter au moins une tension ou une intensité consommée pendant la charge de la batterie d'énergie d'un véhicule électrique,
- brancher périodiquement une borne positive du tampon de charge et une borne négative du tampon de charge sur les enroulements primaires (L'₁, L'₂, L'₃) du transformateur,
- recevoir le signal de capteur et commander le circuit de commutation pour fournir une tension prédéterminée et/ou un courant de charge à une interface de charge,
procédé **caractérisé en ce que**
un circuit sélecteur de mode (72) est configuré pour recevoir un signal de mode indiquant si la batterie électrique demande du courant alternatif ou du courant continu, et
le sélecteur de mode (72) en mode de charge en courant continu branche un pont redresseur (RD₁, RD₂, 21, RD₃, RD₄) sur au moins un second enroulement (L"₁) du transformateur à n-phases, et
en mode de charge en courant alternatif, il coupe le pont redresseur (RD₁, RD₂, RD₃, RD₄) d'au moins un enroulement secondaire (L"₁) du transformateur à n-phases.
